# EUROPÄISCHE PATENTSCHRIFT

(11) **EP 3 230 623 B1**
(45) Veröffentlichungstag und Bekanntmachung des Hinweises auf die Patenterteilung: **26.05.2021**
(21) Anmeldenummer: 15804087.3
(22) Anmeldetag: 25.11.2015
(51) Int. Cl.: F16H 1/28

(54) **GETRIEBE**
TRANSMISSION
TRANSMISSION

(30) Priorität: 25.11.2014 DE 102014017691
(43) Veröffentlichungstag der Anmeldung: 18.10.2017
(73) Patentinhaber: KKD - Getriebebau UG, 71287 Weissach (DE)
(72) Erfinder: PLATH, Klaus, 08132 Mülsen (DE)
(74) Vertreter: Petersen, Frank
(86) Internationale Anmeldenummer: PCT/EP2015/077680
(87) Internationale Veröffentlichungsnummer: WO 2016/083467

(56) Entgegenhaltungen:
- WO-A1-88/08095
- WO-A1-2005/057053
- DE-A1-102011 016 128
- DE-U1- 20 308 685

## Beschreibung

Die Erfindung betrifft ein Getriebe, welches folgende Merkmale umfasst: Ein Sonnenradelement und ein Hohlradelement, von denen eines fest angeordnet und das andere bewegbar gelagert ist; ein auf einer Lagerachse angeordnetes Planetenrad, welches derart zwischen dem Sonnenradelement und dem Hohlradelement angeordnet ist, dass es an seinem Umfang in Wirk-verbindung mit der jeweils angrenzenden Seite des Sonnenradelements und des Hohlradelements steht; einen Planetenradträger, der mit der Lagerachse des Planetenrads verbunden und derart angeordnet ist, dass eine Führung des Planetenrads zwischen dem Sonnenradelement und dem Hohlradelement bewirkt wird; eine fest mit dem Planetenrad verbundene Hohlachse, welche das Planetenrad beabstandet umgibt und ein zwischen dem Planetenrad und der Hohlachse auf einer Achse angeordnetes Antriebselement zum Antrieb der Hohlachse, das mit dem Planetenrad und der Hohlachse in Wirkverbindung steht.

Ein derartiges Getriebe ist aus der DE 10 2011 016 128 A1 bekannt. Ein solches Getriebe kann sowohl als Zahnstangengetriebe als auch als Planetenradgetriebe realisiert werden. Die Führung des Planetenrads erfolgt über die Lagerachse des Planetenrads, die fest mit der Gleitschiene und mit dem Planetenrad verbunden ist. Das Antriebselement ist als Zahnrad ausgebildet und exzentrisch angeordnet. Die Achse des Antriebselements ist bei einem Zahnstangengetriebe fest mit einer Gleitschiene verbunden; bei einem Planetengetriebe ist sie fest mit einem im Achsenzentrum des Getriebes drehbar gelagerten Träger verbunden. Die Antriebsrichtung und die Antriebskraft des Antriebselements sind somit an feste Bahnen gebunden: Bei einem linearen Getriebe an die durch die Verschiebung der Gleitschiene definierte lineare Bahn, die parallel zu den Sonnenelement- und Hohlradelement-Zahnstangen verläuft, und bei einem Planetengetriebe an die durch den Träger definierte Kreisbahn, die achsensymmetrisch mit Sonnenradelement- und Hohlradelement verläuft. Eine Antriebskraft des Antriebselements auf das Hohlachsenelement wird von diesem direkt auf die Lagerachse des Planetenrads und weiter über den Planetenradträger auf die Gleitschiene oder auf die Mittelachse des Getriebes übertragen. Somit entsteht durch die schräge Krafteinwirkung des Antriebselements eine Art Schleppbewegung des Planetenrads, bevor dieses aufgrund des Eingreifens der Zähne des Planetenrads mit den Zähnen von dem Sonnenrad- und Hohlradelement in eine Drehbewegung versetzt wird. Mit diesem exzentrischen Antrieb werden die Kraftübertragungsverhältnisse in dem Getriebe günstig beeinflusst.

Im Hinblick auf diesen Stand der Technik liegt der Erfindung die Aufgabe zugrunde, die Kraftübertragungsverhältnisse in einem gattungsgemäßen Getriebe weiter zu verbessern.

Diese Aufgabe wird durch ein gattungsgemäßes Getriebe gelöst, bei dem
- die Lagerachse des Planetenradelements beweglich am Planetenradträger angeordnet ist;
- das Antriebselement eine Abrollaußenfläche und die ihm zugewandte Innenseite der Hohlachse eine Abrollinnenfläche aufweist, über die die Wirkverbindung mittels Druck zwischen dem Antriebselement und der Hohlachse erzeugbar ist;
- ein Abrollelement mit einer Abrollfläche derart fest angeordnet ist, dass eine Wirkverbindung zwischen der Abrollfläche des Abrollelements und der Abrollaußenfläche der Hohlachse mittels Druck erzeugbar ist;
- und eine fest mit der Achse des Antriebselements verbundene Zugvorrichtung vorgesehen ist, mit der eine Antriebskraft erzeugbar ist, deren Richtung gegenüber der Tangentialebene an der Abrollfläche des Abrollelements in einem Berührungspunkt der Abrollfläche des Abrollelements mit der Abrollaußenfläche der Hohlachse schräg verläuft.

Die Richtung der Antriebskraft ist insbesondere so gewählt, dass ein Anpressdruck von der Hohlachse auf das Abrollelement ausgeübt wird, der in dem Berührungspunkt eine schräge Komponente hat. D.h. dass die Kraft, die von der Hohlachse auf das Abrollelement wirkt, weder rein senkrecht noch rein waagrecht ist, sondern sowohl eine senkrechte als auch eine waagrechte Kraftkomponente aufweist. Eine rein senkrechte Kraft würde die Hohlachse lediglich an das Abrollelement anpressen und zu keiner Drehbewegung des Planetenrads führen. Bei einer rein waagrechten Antriebskraft würde kein Anpressdruck zwischen der Hohlachse und der Abrollscheibe entstehen, so dass eben-falls keine Drehbewegung des Planetenrads ausgelöst würde. Die Richtung der Antriebskraft an dem Antriebselement wird auch danach bestimmt, ob der Antrieb oder der Abtrieb des Getriebes an dem Antriebselement erfolgt.

Wenn mit der Zugvorrichtung eine schräg verlaufende Antriebskraft an der Achse des Antriebselements erzeugt wird, so wird mittels des Antriebselements gegen die Abrollinnenfläche der Hohlachse gedrückt. Da die Zugvorrichtung und das Antriebselement freibeweglich sind, und insbesondere nicht auf einem Trägerelement angeordnet sind, ist für die Achse des Antriebselements keine feste Bahn vorgegeben. Durch die Krafteinwirkung auf die Hohlachse wird die Hohlachse gegen die Abrollfläche des Abrollelements gepresst. An dem Berührungspunkt entsteht eine der Antriebskraft entgegenwirkende Gegenkraft. Aufgrund dieser Gegenkraft wird das fest mit der Hohlachse verbundene Planetenrad in eine Drehbewegung versetzt. Da die Lagerachse des Planetenrads beweglich am Planetenradträger gelagert ist, erfolgt nicht sofort eine Kraft-übertragung auf die Lagerachse des Planetenrads. Das Planetenrad kann sich hier zwischen dem Sonnenradelement und dem Hohlradelement in alle Richtungen frei bewegen und Schwenkbewegungen durchführen. Diese Bewegungen des Planetenrads werden durch die Zahneingriffe der Verzahnung des Planeten-rads in die Verzahnung des Sonnenradelements und des Hohlradelements begrenzt. Bei Eingriff der Verzahnung erfolgt die Kraftübertragung des Planetenrads zu dem Sonnenradelement und zu dem Hohlradelement über die bewegliche Lagerachse des Planetenrads.

Es ist wesentlich für die Erfindung, dass die Lagerachse des Planetenrads nicht fest mit dem Planetenradträger verbunden ist. Bei einem linearen Getriebe bzw. bei Stangengetrieben bedeutet dies, dass die Lagerachse des Planetenrads nicht an eine lineare Gleitschiene gebunden und daher nicht zwangsweise eine geradlinige Bewegung ausführt. Bei einem Planetengetriebe führt die Lagerachse des Planetenrads dabei nicht zwangsweise eine kreisförmige Bewegung aus. Eine schräg verlaufende Antriebskraft zieht am Planetenrad, ohne an dem Planetenradträger über die Lagerachse zu ziehen. Diese Beweglichkeit des Planetenrads verbunden mit der schrägen Krafteinwirkung führt zu einer erheblichen Verbesserung in der Kraftübertragung des Getriebes. Es wird hierdurch möglich, die Antriebskraft, die auf das Getriebe wirkt, gezielt aufzuteilen. Die Kraftkomponenten können in geeigneter vorherbestimmter Weise an bestimmte Punkte im Getriebe übertragen werden. Es können somit optimale Punkte am Getriebe für die Kraftübertragung bestimmt werden. Hierdurch kann der Energieverlust an Getrieben, der aufgrund von Reibung bei der Kraftübertragung zustande kommt, erheblich reduziert werden.

Gemäß einer vorteilhaften Weiterbildung der Erfindung ist zwischen dem Planetenrad und der Hohlachse ein auf einer zweiten Achse angeordnetes zweites Antriebselement zum Antrieb der Hohlachse angeordnet, das mit dem Planetenrad und der Hohlachse in Wirkverbindung steht, wobei die zweite Achse fest mit der Zugvorrichtung und über ein Verbindungselement mit der ersten Achse verbunden ist. Aufgrund einer derartigen Anordnung können die Druckverhältnisse und die Verhältnisse der Kraftübertragung von einer an der Zugvorrichtung angreifenden Antriebskraft über die Antriebselemente auf die Hohlachse in der Hohlachse verteilt und verändert werden. Das Verbindungselement zwischen der ersten Achse des ersten Antriebselements und der zweiten Achse des zweiten Antriebselements verhindert, dass das erste und das zweite Antriebselement miteinander kollidieren und kann einen vorgegebenen Abstand zwischen den Antriebselementen bewirken.

Gemäß einem weiteren Ausführungsbeispiel der Erfindung ist die Zugvorrichtung mit dem Planetenradträger derart verbunden, dass ein Teil der Antriebskraft auf den Planetenradträger wirkt. Hierdurch können zusätzliche Kraftübertragungs-punkte am Planetenradträger ausgewählt werden und mit der Zugvorrichtung verbunden werden. Aufgrund der beweglichen Lagerachse des Planetenrads kann mit dem Antriebselement die Antriebskraft sowohl auf das Planetenrad selbst als auch auf den Planetenradträger übertragen werden. Hierdurch kann eine weitere günstige Aufteilung der Kräfte erreicht werden.

Es ist vorteilhaft, wenn die Zugvorrichtung ein erstes Zugelement, insbesondere eine erste Zugstange umfasst, die fest an der ersten Achse des ersten Antriebselements angeordnet ist und gegenüber der Tangentialebene an der Abrollfläche des Abrollelements in einem Berührungspunkt der Abrollfläche des Abrollelements mit der Abrollaußenfläche der Hohlachse schräg verläuft. Auch ist es günstig, wenn die Zugvorrichtung ein zweites Zugelement, insbesondere eine zweite Zugstange umfasst, die fest an der zweiten Achse des zweiten Antriebselements angeordnet ist, die gegenüber der Tangentialebene an der Abrollfläche des Abrollelements in einem Berührungs- punkt der Abrollfläche des Abrollelements mit der äußeren Abrollfläche der Hohlachse schräg verläuft und die mit dem nicht an der ersten Achse befestigten Ende des ersten Zugelements, insbesondere der ersten Zugstange zu einem Angriffs- punkt verbunden ist. Die Ausbildung der Zugvorrichtung mit Zugstangen ist eine einfache und zuverlässige Realisierung der Zugvorrichtung. Es können anstelle von Zugstangen erfindungsgemäß auch andere Zugelemente, beispielsweise Seile verwendet werden, wenn dies für die Anwendung und den Aufbau des Getriebes erwünscht ist. Es wird auf diese Weise ein V-Antrieb ausgebildet, bei dem die Spitze des Vs den Antriebspunkt oder Zugpunkt für eine an der Zugvorrichtung angreifende Kraft bildet. Es ist wesentlich, dass der Antriebs- oder Zugpunkt der Zugvorrichtung keinen festen Kontakt mit anderen Bauteilen des Getriebes hat. Es kann ein Zugbolzen an der Spitze des V-Antriebs angebracht werden. Mit dem Zugbolzen ist die Spitze des V-Antriebs frei beweglich und bildet einen freien Antriebspunkt. Anstelle von Zugstangen können auch Zugseile oder andere Zugelemente verwendet werden.

Erfindungsgemäß kann die Zugvorrichtung ein zweites Zugelement, insbesondere eine zweite Zugstange umfassen, deren eines Ende fest mit dem Planetenradträger verbunden ist und deren anderes Ende mit dem freien Ende der ersten Zugstange bzw. des ersten Zugelements verbunden ist, derart, dass die erste und die zweite Zugstange oder Zugelemente einen V-Antrieb bilden. Bei einem Planetenradgetriebe können so die Kräfte günstig an geeigneten Kraftpunkten übertragen werden. Auch kann die Zugvorrichtung eine zweite Zugstange umfassen, deren erstes Ende fest mit dem Planetenradträger verbunden ist und deren zweites Ende sowohl mit dem freien Ende der ersten Zugstange als auch mit dem Planetenradträger verbunden ist, wobei eine dritte Zugstange oder ein anderes drittes Zugelement vorgesehen ist, deren eines Ende mit dem ersten Ende der zweiten Zugstange derart verbunden ist, dass die Zugstangen bzw. die Zugelemente in Reihe angeordnet sind und einen Mehrfach-V-Antrieb bilden. Die Kraftverhältnisse können so weiter aufgeteilt werden. Ferner kann die Zugvorrichtung einen Zugbolzen umfassen, der mit einem freien Ende einer der Zugstangen verbunden ist und der derart angeordnet ist, dass der Antrieb oder Abtrieb des Getriebes über den Zugbolzen erfolgen kann. Hierdurch lassen sich die Kräfte ohne Reibungsverluste günstig übertragen.

Auch ist es vorteilhaft, wenn eine Zugbolzen-Gleitschiene derart angeordnet ist, dass ein mit dem Angriffspunkt der Zugvorrichtung verbundener Zugbolzen entlang der Zugbolzen-Gleitschiene in eine vorherbestimmte Richtung bewegbar ist. Somit wird an der Spitze des V-Antriebs eine Führung gewährleistet, wobei gleichzeitig die Beweglichkeit des Antriebspunkts erhalten bleibt.

Günstigerweise kann eine Zugstangen-Gleitschiene vorgesehen sein, die geeignet zur Führung einer der Zugstangen in eine vorherbestimmte Richtung angeordnet ist. Hierdurch wird verhindert, dass die freie Beweglichkeit der Zugstange zu störenden Geräuschen führt, die aufgrund von Anstoßen, Klappern oder Schleifen der Zugstange an anderen Bauteilen des Getriebes zustande kommen. Die Verwendung einer Gleitschiene hat den weiteren Vorteil, dass bei der Kraftübertragung von schräg verlaufenden Kräften, die sich in zwei Richtungen aufteilen, sowohl eine drehende als auch eine geradlinige Bewegungen übertragen werden sowie die mit diesen Bewegungen verbundenen Kräfte.

Es ist günstig, wenn das erste und/oder das zweite Antriebselement jeweils als Antriebskugellager ausgebildet sind. Hierdurch werden Beweglichkeit, Kraftübertragung sowie die Reduzierung von Reibungsverlusten weiter verbessert.

Auch ist es vorteilhaft, wenn auf der Hohlachse ein Hohlachsenkugellager aufgebracht ist, dessen Außenfläche die Abrollaußenfläche der Hohlachse bildet, mit der die Wirkverbindung zu der Abrollfläche des Abrollelements mittels Druck erzeugbar ist. Das Hohlachsenkugellager ist achsensymmetrisch zu der Hohlachse angeordnet. Vorzugsweise ist es beweglich auf die Außenfläche der Hohlachse aufgebracht. Es wird somit eine weitere Beweglichkeit in dem Getriebe erzeugt, durch die die Kraftübertragung weiter verbessert wird und Reibungsverluste weiter reduziert werden.

Gemäß einem vorteilhaften Ausführungsbeispiel der Erfindung ist das Getriebe als Zahnstangengetriebe ausgebildet, bei dem das Sonnenradelement, das Hohlradelement und der Planetenradträger jeweils als Zahnstange und das Abrollelement als lineares Element mit einer linearen Abrollfläche ausgebildet sind, die jeweils fest angeordnet oder in einer Gleitschiene beweglich gelagert sind und parallel zueinander verlaufen. Bei diesem Ausführungsbeispiel ist es vorteilhaft, wenn zwei der Zahnstangengetriebe vorgesehen sind, die ein gemeinsames Abrollelement aufweisen, in Bezug auf welches die beiden Zahnstangengetriebe spiegelbildlich zueinander angeordnet sind, wobei die Zugstangen beider Zahnstangengetriebe in einem gemeinsamen Angriffspunkt miteinander verbunden sind, der entlang einer Symmetrieachse angeordnet ist. Für die beiden Zahnstangengetriebe gibt es somit einen gemeinsamen Angriffspunkt, der die Spitze des Vs bildet. Ein Antrieb an der Spitze des Vs bewirkt eine Kraft, aufgrund welcher die sich spiegelbildlich einander gegenüberliegenden Zugstangen versuchen, sich linear auszurichten. Mit anderen Worten wirkt diese Kraft derart, dass die von der Spitze des Vs abgewandten Enden der Zugstangen des V-Antriebs dazu tendieren, sich aufeinander zuzubewegen, so dass das V dazu tendiert, schmaler zu werden. Durch den Antrieb an der Spitze des Vs werden also mittels der Antriebselemente die Hohlachsen der einander spiegelbildlich gegenüberliegenden Planetenräder zusammengepresst. Durch den dadurch erzeugten Anpressdruck der Hohlachsen bzw. der auf den Hohlachsen angeordneten Hohlachsenkugellager entsteht eine Drehung der Planetenräder. Hierdurch wird eine weitere Verbesserung in den Eigenschaften der Kraftübertragung im Getriebe erreicht.

Gemäß einem zweiten Ausführungsbeispiel der Erfindung ist das Getriebe als Planentenradgetriebe ausgebildet, bei dem das Sonnenradelement, das Hohlradelement und der Planetenradträger jeweils als Zahnrad und das Abrollelement als Abrollscheibe ausgebildet sind, die jeweils an einer zentralen Achse fest oder drehbar gelagert sind und konzentrische Kreisbahnen bilden. Hierdurch wird eine kompakte und vielseitige Anordnung des Getriebes erreicht.

Weitere Einzelheiten, Merkmale und Vorteile der vorliegenden Erfindung ergeben sich aus der nachfolgenden Beschreibung bevorzugter Ausführungsbeispiele unter Bezugnahme auf die Zeichnung.

Es zeigen:
- Fig. 1: Eine schematische Darstellung eines ersten Ausführungsbeispiels eines erfindungsgemäßen Zahnstangengetriebes;
- Fig. 2: eine schematische Darstellung eines zweiten Ausführungsbeispiels eines erfindungsgemäßen Zahnstangengetriebes;
- Fig. 3: eine schematische Darstellung eines ersten Ausführungsbeispiels eines erfindungsgemäßen Planetenradgetriebes;
- Fig. 4: eine schematische Darstellung eines zweiten Ausführungsbeispiels eines erfindungsgemäßen Planetenradgetriebes;
- Fig. 5: eine schematische Darstellung eines dritten Ausführungsbeispiels eines erfindungsgemäßen Planetenradgetriebes und

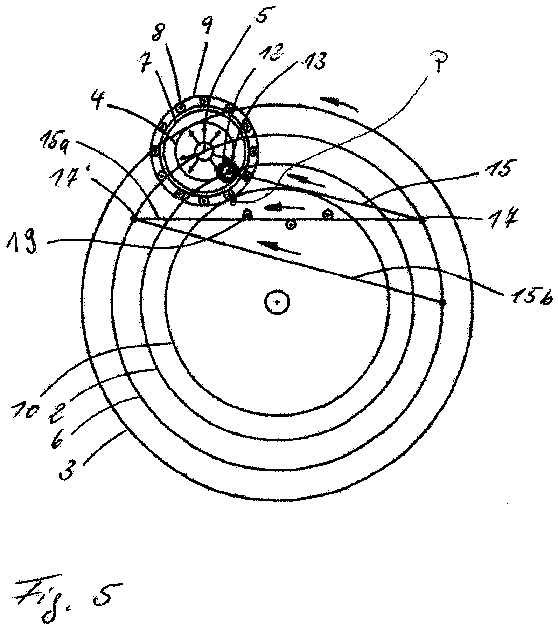

- Fig. 5: eine schematische Darstellung eines vierten Ausführungsbeispiels eines erfindungsgemäßen Planetenradgetriebes.

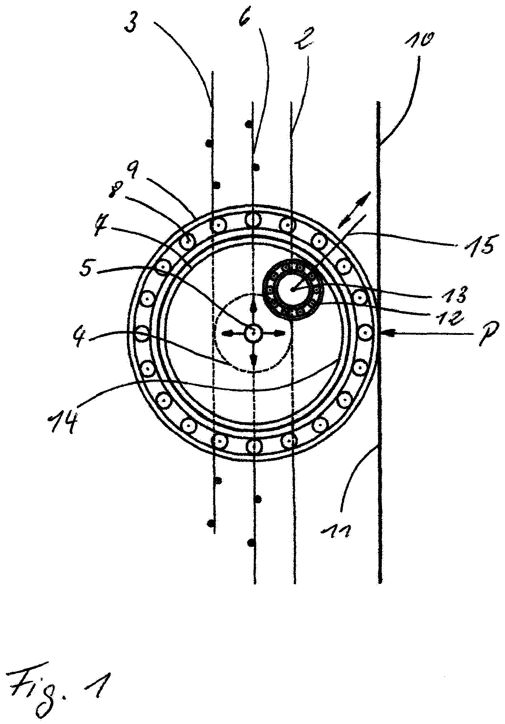

In Figur 1 ist ein Ausführungsbeispiel eines linearen Getriebes 1 gezeigt, bei dem zwei zueinander parallel verlaufende Zahnstangen angeordnet sind, von denen eine ein Sonnenradelement 2 und die andere ein Hohlradelement 3 bilden. Die Bezeichnung wird so gewählt, da die Zahnstangen und die übrigen Elemente in ihrer Funktionsweise analog den entsprechenden Zahnrädern und anderen Elementen in einem Planetenradgetriebe entsprechen. Je nach Antriebsart des Getriebes 1 ist eine der beiden Zahnstangen fest und die andere bewegbar angeordnet. Zwischen dem Sonnenradelement 2 und dem Hohlradelement 3 ist ein Planetenrad 4 auf einer Lagerachse 5 drehbar angeordnet. Bei dem Planetenrad 4 handelt es sich um ein Zahnrad. Es ist so angeordnet, dass es an seinem Umfang in Wirkverbindung mit dem Sonnenradelement 2 und dem Hohlradelement 3 steht. Die Wirkverbindung wird hier durch einen Zahneingriff der Verzahnung des Planetenrads 4 in die Verzahnung des Sonnenradelements 2 und des Hohlradelements 3 realisiert. Die Lagerachse 5 des Planetenrads 4 ist an einem Planetenradträger 6, der parallel zu dem Sonnenradelement 2 und dem Hohlradelement 3 verläuft, beweglich angeordnet. Die Lagerachse 5 ist dabei insbesondere drehbar, schwenkbar und radial verschiebbar auf dem Planetenradträger 6 angeordnet. Der Planetenradträger 6 bewirkt eine Führung des Planetenrads 4 zwischen dem Sonnenradelement 2 und dem Hohlradelement 3.

Ferner umfasst das Getriebe eine Hohlachse 7, die einen größeren Umfang aufweist als das Planetenrad 4. Die Hohlachse 7 ist fest mit dem Planetenrad 4 verbunden und ebenfalls drehbar auf der Lagerachse 5 gelagert, so dass sie das Planetenrad 4 beabstandet und achsensymmetrisch umgibt. Auf der Hohlachse 7 ist ein Hohlachsenkugellager 8 angeordnet, dessen Außenfläche die Abrollaußenfläche 9 der Hohlachse 7 bildet. Es ist ein Abrollelement 10 mit einer Abrollfläche 11 vorgesehen, welches parallel zu dem Sonnenradelement 2, dem Hohlradelement 3 und dem Planetenradträger 6 angeordnet ist. Das Abrollelement 10 ist fest angeordnet und derart, dass eine Wirkverbindung zwischen der Abrollfläche 11 des Abrollelements 10 und der Abrollaußenfläche 9 des Hohlachsenkugellagers 8 mittels Druck erzeugbar ist.

Zwischen dem Planetenrad 4 und der Hohlachse 7 ist ein Antriebselement 12 auf einer Achse 13 drehbar zum Antrieb der Hohlachse 7 angeordnet. Das Antriebselement 12 ist hier als Kugellager ausgebildet. Es steht mit dem Planetenrad 4 und der Hohlachse 7 in Wirkverbindung. Die Wirkverbindung zwischen der Außenfläche des Antriebselements 12 und der Abrollinnenfläche 14 der Hohlachse 7 kann mittels Druck erzeugt werden, durch den das Antriebselement 12 an die Hohlachse 7 gepresst wird oder umgekehrt. In dem gezeigten Ausführungs-beispiel ist eine Zugstange 15 fest an der Achse 13 des Antriebselements 12 angeordnet, über die der exzentrische Antrieb des Getriebes 1 in der Hohlachse 7 erfolgen kann. Die Zugstange 15 ist derart angeordnet, dass sie zur Erzeugung einer Kraft geeignet ist, die gegenüber der Tangentialebene an der Abrollfläche 11 des Abrollelements 10 in einem Berührungspunkt P der Abrollfläche 11 des Abrollelements 10 mit der Abrollaußenfläche 9 der Hohlachse 7 schräg verläuft. In dem gezeigten Ausführungsbeispiel wird die Tangentialebene durch die Abrollfläche 11 des Abrollelements 10 gebildet. Die Zugstange 15 ist schräg zu der Tangentialebene, hier zu der Abrollfläche 11 ausgebildet. Durch Ziehen oder Drücken an der Zugstange 15 wird eine Kraft erzeugt, die in der von der Zugstange 15 vorgegebenen Richtung wirkt.

Die Achse 13 des Antriebselements 12 und die Zugstange 15 sind nicht fest mit einem anderen Teil des Getriebes 1 verbunden. Sie sind so angeordnet, dass für die Achse 13 des Antriebselements 12 keine Führung vorgesehen ist, aufgrund welcher die Achse 13 zwangsweise eine geradlinige Bewegung parallel zu dem Sonnenradelement 2 und zu dem Hohlradelement 3 ausführt.

Durch einen Zug an der Zugstange 15 wird das Antriebselement 12 schräg gegen die Abrollinnenfläche 14 der Hohlachse 7 gedrückt. Hierdurch entsteht eine schräge Krafteinwirkung auf die Hohlachse 7 und auf das fest mit der Hohlachse 7 verbundene Planetenrad 4. Das auf der Hohlachse 7 angeordnete Hohlachsenkugellager 8 wird hierdurch mit der Abrollaußenfläche 9 gegen die Abrollfläche 11 des Abrollelements 10 gepresst. Bei dem jeweiligen Anpresspunkt entsteht auf der Abrollfläche 11 des Abrollelements 10 eine dem Anpressdruck entgegenwirkende Gegenkraft. Infolge dieser Gegenkraft wird das Planetenrad 4 in eine Drehbewegung versetzt. Diese Drehbewegung erfolgt vor einer Kraftübertragung auf die Lagerachse 5 des Planetenrads 4 und damit bevor es zu einem Zahneingriff zwischen dem Planetenrad 4 mit Sonnenradelement 2 und dem Hohlradelement 3 kommt. Hierdurch werden Reibungskräfte erheblich reduziert und ein günstiges Verhältnisse in der Kraftübertragung erreicht. Insbesondere können Kräfte durch die schräge Krafteinwirkung an der Zugvorrichtung gezielt aufgeteilt werden. Hierzu kann der Winkel, den die Zugstange mit dem Abrollelement 10 bzw. mit der Tangentialebene an der Abrollfläche 11 durch den Berührungspunkt P bildet, geeignet gewählt werden.

In dem gezeigten Ausführungsbeispiel sind das Hohlradelement 3, Sonnenradelement 2 und der Planetenradträger 6 jeweils auf einer Gleitschiene angeordnet, so dass sie jeweils in die von der jeweiligen Gleitschiene vorgegebene Richtung der Gleitschiene beweglich angeordnet sind. Das Sonnenradelement 2 ist fest angeordnet. Bei dieser Anordnung erfolgt der Antrieb über die Zugstange 15, das Antriebselement 12 und somit über das Planetenrad 4. Der Abtrieb erfolgt über das Hohlradelement 3. Es wird darauf hingewiesen, dass dieses Ausführungsbeispiel keine Einschränkung der Erfindung bedeutet. Es ist möglich, die Gleitschienen anders anzuordnen, Antrieb und Abtrieb an anderen Teilen des Getriebes 1 zu wählen. Es können hier alle aus der Getriebetechnik bekannten Varianten gewählt werden.

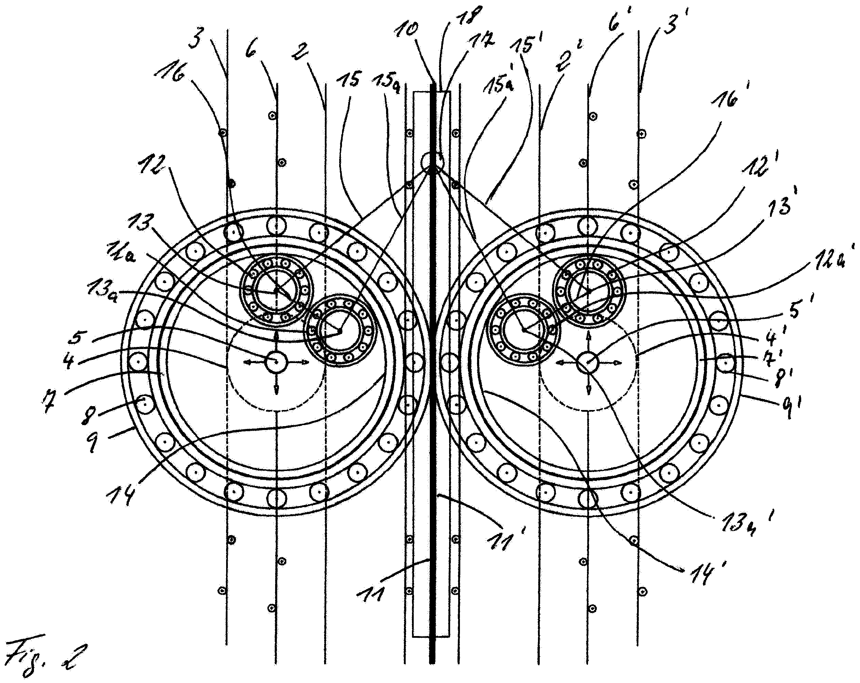

Figur 2 zeigt ein anderes Ausführungsbeispiel eines erfindungsgemäßen Getriebes. Es sind zwei lineare Getriebe 1, 1' vorgesehen, die ähnlich wie das lineare Getriebe aus Figur 1 ausgebildet sind. Sie weisen jeweils parallel zueinander verlaufende Zahnstangen auf, von denen jeweils eine ein Sonnenradelement 2, 2' und die andere ein Hohlradelement 3, 3' bilden. Die Getriebe 1, 1' sind spiegelbildlich zueinander angeordnet. Es ist ein gemeinsames Abrollelement 10 mit Abrollflächen 11, 11' vorgesehen, in Bezug auf welches die beiden Zahnstangengetriebe 1, 1' spiegelbildlich zueinander angeordnet sind.

Zwischen dem Sonnenradelement 2, 2' und dem Hohlradelement 3, 3' des jeweiligen Getriebes 1 bzw. 1' ist jeweils ein Planetenrad 4, 4' auf einer Lagerachse 5, 5' derart angeordnet, dass es an seinem Umfang in Wirkverbindung mit dem Sonnenradelement 2, 2' und dem Hohlradelement 3, 3' steht. Die jeweilige Lagerachse 5, 5' des Planetenrads 4, 4' ist an einem Planetenradträger 6, 6', der parallel zu dem Sonnenradelement 2, 2' und dem Hohlradelement 3, 3' verläuft, beweglich angeordnet. Die jeweilige Lagerachse 5, 5' ist dabei insbesondere drehbar, schwenkbar und radial verschiebbar auf dem Planetenradträger 6, 6' angeordnet. Der Planetenradträger 6, 6' bewirkt eine Führung des Planetenrads 4, 4' zwischen dem Sonnenradelement 2, 2' und dem Hohlradelement 3, 3'.

Jedes der Getriebe 1, 1' umfasst eine Hohlachse 7, 7', die einen größeren Umfang aufweist als das Planetenrad 4, 4' und fest mit dem Planetenrad 4, 4' verbunden ist, so dass sie das Planetenrad 4, 4' beabstandet und achsensymmetrisch umgibt. Auf der jeweiligen Hohlachse 7, 7' ist ein Hohlachsenkugellager 8, 8' angeordnet, dessen Außenfläche jeweils die Abrollaußenfläche 9, 9' der Hohlachse 7, 7' bildet.

Das gemeinsame Abrollelement 10 ist parallel zu den Sonnenradelementen 2, 2', den Hohlradelementen 3, 3' und den Planeten- radträger 6, 6' angeordnet. Das Abrollelement 10 ist fest angeordnet und derart, dass eine Wirkverbindung zwischen der jeweiligen Abrollfläche 11, 11' des Abrollelements 10 und der jeweiligen Abrollaußenfläche 9, 9' des Hohlachsenkugellagers 8, 8' mittels Druck erzeugbar ist.

In diesem Ausführungsbeispiel der Erfindung sind zwischen dem Planetenrad 4, 4' und der Hohlachse 7, 7' eines jeden der linearen Getriebe 1, 1' zwei Antriebselemente 12, 12a, 12', 12a' auf einer Achse 13, 13a, 13', 13a' zum Antrieb der jeweiligen Hohlachse 7, 7' angeordnet. Die Antriebselemente 12, 12a, 12', 12a' sind jeweils als Kugellager ausgebildet. Dieses steht jeweils mit dem Planetenrad 4, 4' und der Hohlachse 7, 7' in Wirkverbindung wie in Figur 1. An jeder der Achsen 13, 13a, 13', 13a' der Antriebselemente 12, 12a,12', 12a' ist eine Zugstange 15, 15a, 15', 15a' fest angeordnet. Dabei weisen die beiden Zugstangen 15, 15a bzw. 15', 15a' eines der Getriebe 1, 1' jeweils einen unterschiedlichen Winkel gegenüber der Abrollfläche 11, 11' des Abrollelements 10 auf. Die beiden Antriebselemente 12, 12a, 12', 12a' des jeweiligen Getriebes 1, 1', die innerhalb einer der Hohlachsen 7, 7' angeordnet sind, sind jeweils mit einem Verbindungselement 16, 16' miteinander verbunden, so dass sie bei einer Drehbewegung nicht miteinander kollidieren und in festem Abstand zueinander gehalten werden. Durch diese Anordnung der Antriebselemente 12, 12a, 12', 12a' wird erreicht, dass die Druckverhältnisse und damit die Kraftübertragungsverhältnisse in der jeweiligen Hohlachse 7, 7' des jeweiligen Planetenrads 4, 4' verteilt und verändert werden können.

Die Zugstangen 15, 15a, 15', 15a' der Getriebe 1, 1' sind in an ihrem von der jeweiligen Achse 13, 13a, 13', 13a' der Antriebselemente 12, 12a, 12', 12a' wegweisenden Ende miteinander in einem Verbindungpunkt V verbunden. Es entsteht hierdurch ein Mehrfach-V-Antrieb, der einen gemeinsamen Antriebspunkt, nämlich bei dem Verbindungspunkt P der Zugstangen 15, 15a, 15', 15a' aufweist, welcher wiederum die Spitze des Vs bildet. In dem Verbindungspunkt V kann ein Zugbolzen 17 angeordnet sein, an dem die Zugstangen 15, 15a, 15', 15a' befestigt sind, so dass auf diese gleichzeitig eine Antriebskraft ausgeübt werden kann. Durch den Antrieb des Gesamtgetriebes in dem Verbindungspunkt V der Zugstangen 15, 15a, 15', 15a' wird sozusagen auf beide Vs eine Kraft ausgeübt, die grundsätzlich an jeder der Achsen 13, 13a, 13', 13a' der Antriebselemente 12, 12a, 12', 12a' angreift. Dies bewirkt, dass die Abrollaußenflächen 9, 9' der Hohlachsenkugellager 8, 8' beidseitig an das Abrollelement 10 gedrückt werden. Zusätzlich bewirkt der Antriebe an der Spitze des Vs, dass die einander spiegelbildlich gegenüberliegenden Zugstangen 15, 15a, 15', 15a' eine Kraftkomponente erfahren, die so wirkt, dass sie sich aufeinander zubewegen würden, wenn sie frei beweglich wären. Anders ausgedrückt, bewirkt ein Antrieb an der Spitze des Vs, dass die Zugstangen 15, 15a, 15', 15a' bestrebt sind, sich linear, insbesondere parallel bzw. in gleicher Linie wie das Abrollelement 10 auszurichten. Der V-Antriebe bewirkt somit eine Art Zwangskraft, die dazu mit- wirkt, dass die beiden sich spiegelbildlich einander gegen- überliegenden Hohlachsen 7, 7' der Planetenräder 4, 4' auf dem Abrollelement 10 gegenüberliegend zusammengepresst werden. Durch diesen Anpressdruck der Hohlachsen 7, 7' bzw. der Hohlachsenkugellager 8, 8' gegen die jeweilige Abrollfläche 11, 11' des Abrollelements 10 entsteht eine Drehbewegung des jeweiligen Planetenrads 4, 4'.

Die Spitze des Vs des V-Antriebs ist auch hier nicht fest mit einem anderen Teil der Getriebe 1, 1' verbunden. Parallel zu dem Abrollelement 10 ist hier eine Zugbolzen-Gleitschiene 18 vorgesehen, auf welcher der Zugbolzen derart angeordnet ist, dass die Spitze des Vs des V-Antriebs linear und parallel zu dem Abrollelement 10 geführt wird.

Der Winkel, der durch die Spitze des Vs des V-Antriebs gebildet wird, kann für jede spezifische Anwendung geeignet gewählt werden. Günstige Winkel in der Spitze des Vs sind etwa zwischen 90° und 120°.

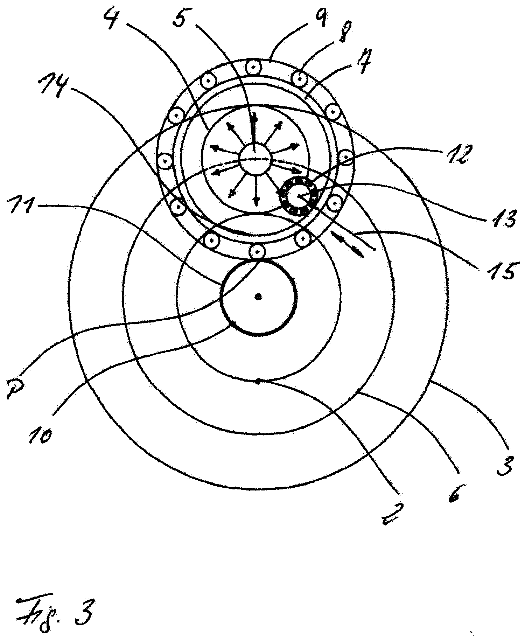

In dem gezeigten Ausführungsbeispiel sind wie in Figur 1 die Hohlradelemente 3, 3' und die Planetenradträger 6, 6' jeweils auf einer Gleitschiene angeordnet, so dass sie jeweils in die von der jeweiligen Gleitschiene vorgegebene Richtung der Gleitschiene beweglich angeordnet sind. Die Sonnenradelemente 2, 2' und der Zugbolzen 17 sind jeweils fest angeordnet. Bei dieser Anordnung erfolgt der Antrieb über den Zugbolzen 17 und die Zugstangen 15, 15a, 15', 15a'und der Abtrieb über die Hohlradelemente 3, 3'. Wie bei dem Ausführungsbeispiel der Figur 1 können auch hier Antrieb und Abrieb an anderen Teilen des Getriebes gewählt werden und die Anordnung entsprechend den jeweiligen Anforderungen und Wünschen angepasst werden. In Figur 3 ist ein Ausführungsbeispiel eines erfindungsgemäßen Planetenradgetriebes gezeigt, das in seiner Funktionsweise prinzipiell analog dem linearen Getriebe aus Figur 1 ausgestaltet ist. Das Sonnenradelement 2 und das Hohlradelement 3 sind jeweils mit kreisförmigen Querschnitt mit Verzahnung ausgebildet, wie es aus dem Stand der Technik bekannt ist. Zwischen dem Sonnenradelement 2 und dem Hohlradelement 3 ist das Planetenrad 4 auf der Lagerachse 5 derart angeordnet, dass es über die Verzahnung an seinem Umfang in Wirkverbindung mit den Verzahnungen an dem Sonnenradelement 2 und dem Hohlradelement 3 steht. Der Planetenradträger 6 ist konzentrisch zu dem Sonnenradelement 2 und dem Hohlradelement 3 angeordnet. Die Lagerachse 5 des Planetenrads 4 ist gemäß der Erfindung beweglich an dem Planetenradträger 6 angeordnet.

Die Lagerachse 5 ist wie in den anderen Ausführungsbeispielen insbesondere drehbar, schwenkbar und radial verschiebbar auf dem Planetenradträger 6 gelagert. Der Planetenradträger 6 bewirkt eine Führung des Planetenrads 4 zwischen dem Sonnenradelement 2 und dem Hohlradelement 3. Aufgrund der beweglichen Anordnung der Lagerachse 5 an dem Planetenradträger 6 kann sich das Planetenrad 4 zwischen den Zahnverbindungen des Sonnenradelements 2 und des Hohlradelements 3 hin und her bewegen. Dabei kann die Art, Größe und Spanne der Beweglichkeit des Planetenrads definiert festgelegt werden, wie es für eine bestimmte Anwendung des Getriebes und Anforderungen an das Getriebe vorteilhaft ist. Dabei wird die Beweglichkeit des Planetenrads 4 durch das Zahn-Spiel des Planetenrads 4 zwischen dem Sonnenradelement 2 und dem Hohlradelement 3 bestimmt.

Das Planetenrad 4 ist wie in den anderen Ausführungsbeispielen der Erfindung von der Hohlachse 7 beabstandet und achsensymmetrisch umgeben, wobei die Hohlachse 7 fest mit dem Planetenrad 4 verbunden ist. Auf der Hohlachse 7 ist das Hohlachsenkugellager 8 angeordnet, dessen Außenfläche die Abrollaußenfläche 9 der Hohlachse 7 bildet. Das Abrollelement 10 weist ebenfalls einen kreisförmigen Querschnitt auf und ist konzentrisch zu der Mittelachse des Getriebes 1 sowie zu dem Sonnenradelement 2, dem Hohlradelement 3 und dem Planetenradträger 6 angeordnet. Das Abrollelement 10 ist fest angeordnet und derart, dass eine Wirkverbindung zwischen der Abrollfläche 11 des Abrollelements 10 und der Abrollaußenfläche 9 des Hohlachsenkugellagers 8 mittels Druck erzeugbar ist. Hierzu ist das Abrollelement 10 in dem gezeigten Ausführungsbeispiel im Inneren des Getriebes angeordnet.

Wie bei dem Ausführungsbeispiel der Figur 1 ist zwischen dem Planetenrad 4 und der Hohlachse 7 ein Antriebselement 12 auf der Achse 13 zum Antrieb der Hohlachse 7 angeordnet, das als Kugellager ausgebildet ist. Mittels Druck zwischen der Außenfläche des Antriebselements 12 und der Abrollinnenfläche 14 der Hohlachse 7 kann eine Wirkverbindung erzeugt werden.

Hierzu wird das Antriebselement 12 an die Hohlachse 7 gepresst oder die Hohlachse an das Antriebselement. Es wird hierdurch ein exzentrischer Antrieb des Getriebes 1 ermöglicht.

An der Achse 13 des Antriebselements 12 ist eine Zugstange 15 fest angeordnet, über die der exzentrische Antrieb des Getriebes 1 an der Hohlachse 7 erfolgen kann. Hier kann erfindungsgemäß auch der Abtrieb des Getriebes 1 erfolgen. Die Zugstange 15 ist in diesem Ausführungsbeispiel der Erfindung schräg nach unten angeordnet, so dass in diese oder in die entgegengesetzte Richtung eine Antriebskraft bzw. eine Abtriebskraft erzeugt werden kann. Wesentlich ist hier, dass die Zugstange derart angeordnet ist, dass sie zur Erzeugung einer Kraft geeignet ist, die gegenüber der Tangentialebene an der Abrollfläche 11 des Abrollelements 10 in einem Berührungspunkt P der Abrollfläche 11 des Abrollelements 10 mit der Abrollaußenfläche 9 der Hohlachse 7 schräg verläuft. Die Richtung dieser Kraft, die hier durch die Richtung der Zugstange 15 gegeben ist, ändert sich somit, wenn das Planetenrad 4 mit der Hohlachse 7 an einer anderen Stelle zwischen dem Sonnenradelement 2 und dem Hohlradelement 3 angeordnet ist.

Durch einen Zug an der Zugstange 15 wird das Antriebselement 12 schräg gegen die Abrollinnenfläche 14 der Hohlachse 7 gedrückt. Hierdurch entsteht eine schräge Krafteinwirkung auf die Hohlachse 7 und auf das fest mit der Hohlachse 7 verbundene Planetenrad 4. Das auf der Hohlachse 7 angeordnete Hohlachsenkugellager 8 wird hierdurch mit der Abrollaußenfläche 9 gegen die Abrollfläche 11 des Abrollelements 10 gepresst. Bei dem jeweiligen Anpresspunkt entsteht auf der Abrollfläche 11 des Abrollelements 10 eine dem Anpressdruck entgegenwirkende Gegenkraft. Infolge dieser Gegenkraft wird das Planetenrad 4 in eine Drehbewegung versetzt. Diese Drehbewegung erfolgt vor einer Kraftübertragung auf die Lagerachse 5 des Planetenrads 4 und damit bevor es zu einem Zahneingriff zwischen dem Planetenrad 4 mit Sonnenradelement 2 und dem Hohlradelement 3 kommt. Dies wird dadurch ermöglicht, dass die Lagerachse 5 beweglich am Planetenradträger 6 angeordnet ist und somit keine direkte Zugverbindung zwischen einem schrägen Zug an dem Planetenrad 4 und der Lagerachse 5 an dem Planetenradträger 6 vorhanden ist. Die Beweglichkeit der Lagerachse 5 ist in alle Richtungen gegeben, so dass das Planetenrad 4 zwischen dem Sonnenradelement 2 und dem Hohlradelement 3 Schwenkbewegungen in alle Richtungen durchführen kann. Erst nach dieser Drehbewegung des Planetenrads 4 aufgrund der Beweglichkeit der Lagerachse 5 erfolgt der Zahneingriff zwischen dem Planetenrad 4 und dem Sonnenradelement 2 sowie dem Hohlradelement 3. Die Beweglichkeit des Planetenrads 4 vor den Zahneingriffen wird weiter dadurch verbessert, dass das Hohlachsenkugellager 8 auf der Hohlachse 7 eine ähnlich eingeschränkte Bewegung vollziehen kann, wie es mit der Anordnung einer Gleitschiene möglich ist, wenn diese in gebogener Form angeordnet wäre.

Das Antriebselement 12 und die fest an der Achse 13 angeordnete Zugstange 15 sind nicht fest mit einem Teil des Getriebes 1 verbunden. Insbesondere ist für die Achse 13 des Antriebselements 12 keine Führung vorgesehen, aufgrund welcher die Achse 13 zwangsweise eine kreisförmige Bewegung um die Mittelachse des Getriebes 1 ausführen würde.

Bei dem gezeigten Ausführungsbeispiel kann gewählt werden, welche der einzelnen Komponenten, Sonnenradelement 2 oder Hohlradelement 3, fest oder beweglich angeordnet sind und an welcher Komponente der Antrieb bzw. der Abtrieb erfolgt. Wie bei einem herkömmlichen Getriebe kann der Antrieb oder Abtrieb wahlweise an dem Sonnenradelement 2, dem Hohlradelement 3 oder an dem Planetenrad 4 erfolgen. Das Planetenrad kann wahlweise an dem Sonnenradelement 2 oder an dem Hohlradelement 3 abrollen, je nachdem, welches von beiden fest bzw. beweglich angeordnet ist.

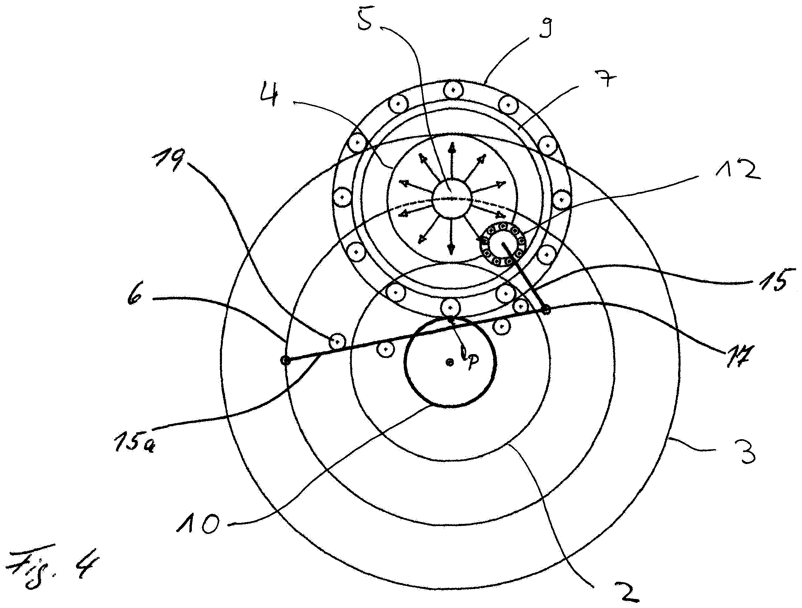

In Figur 4 ist ein Ausführungsbeispiel eines erfindungsgemäßen Planetenradgetriebes gezeigt, das im Wesentlichen der Anordnung des in Figur 3 dargestellten Getriebes 1 entspricht. Es ist eine zweite Zugstange 15a angeordnet, deren eines Ende fest mit dem Planetenradträger 6 verbunden ist, und deren anderes Ende mit dem freien Ende der ersten Zug-stange 15 verbunden ist, derart, dass die erste und die zweite Zugstange 15, 15a einen V-Antrieb bilden. Zum V- Antrieb ist hier in der Spitze des Vs ein Zugbolzen 17 angeordnet, der frei beweglich ist und über den der Antrieb des Getriebes 1 erfolgt.

In dem gezeigten Ausführungsbeispiel ist eine Zugstangen-Gleitschiene 19 vorgesehen, auf der die zweite Zugstange 15a gelagert ist. Die erste Zugstange 15 ist hier nicht auf einer Zugstangen-Gleitschiene 19 gelagert. Da die erste Zugstange 15 mit der zweiten Zugstange 15a verbunden ist, trägt die zweite Zugstange 15a an der Spitze des Vs den Zugbolzen 17. Die Zugstangen-Gleitschiene 19 ist zur Führung der Zugstange 15a in eine vorherbestimmte Richtung geeignet angeordnet. Bei dieser Anordnung der Erfindung erfolgt eine zusätzliche Kraftübertragung auf den Planetenradträger 6 in einem vorgegebenen Kraftpunkt, nämlich dort, wo die zweite Zugstange 15a mit dem Planetenradträger 15a verbunden ist. Wesentlich für den V-Antrieb ist, dass die Spitze des Vs keinen festen Kontakt zu einem Bauteil des Getriebes 1 hat und somit frei beweglich ist. An der Spitze des Vs ist ein Zugbolzen 17 angeordnet, über den der Antrieb des Getriebes erfolgen kann. Die Lagerung der Zugstange 15a auf der Zugstangen-Gleitschiene führt dazu, dass die Zugstange 15a in die vorgegeben Zugrichtung geführt ist. Hierdurch kann ein Schleifen und Klappern der Zugstange 15a an anderen Bauteilen verhindert werden. Es ist auch möglich, in diesem Ausführungsbeispiel der Erfindung weitere Gleitschienen anzuordnen, insbesondere zur Führung des Zugbolzens oder zur Führung der ersten Zugstange 15 in eine vorgegebene Richtung. Die einzelnen Ausführungsformen sind dem Fachmann überlassen, die dieser für jeden spezifischen Anwendungsfall geeignet wählen und kombinieren kann. Es ist auch möglich, dass die zweite Zugstange 15a über einen Zugbolzen 17 an dem Planetenradträger 6 befestigt wird. Hierzu kann die zweite Zugstange 15a beispielsweise auch verkürzt ausgebildet werden. Hierdurch kann die zweite Zugstange 15a näher am Zentrum des Getriebes 1 mit dem Zugbolzen 17 verbunden werden. Die genaue Anordnung kann vom dem Fachmann danach gewählt werden, wie die Aufteilung der Kraftverhältnisse am besten für die jeweilige Anwendung des Getriebes 1 geeignet sind.

In Figur 5 ist ein weiteres Ausführungsbeispiel eines erfindungsgemäßen Planetenradgetriebes gezeigt, das in seinem prinzipiellen Aufbau und in seiner prinzipiellen Funktionsweise den oben beschriebenen Getrieben 1 entspricht. Es handelt sich hier um ein Ausführungsbeispiel mit geänderten Größenverhältnissen. Gegenüber den Ausführungsbeispielen aus den Figuren 3 und 4 wird ein kleineres Planetenrad 4 mit einer kleineren Hohlachse 7 verwendet. Entsprechend sind das Sonnenradelement 2 und das Hohlradelement 3 in ihren Querschnitten an das Planetenrad 4 und das Abrollelement 10 an die Größe des Hohlachsenkugellagers 8 angepasst. Aufgrund derartiger Veränderung in den Größenverhältnissen der einzelnen Elemente des Getriebes 1 kann die Richtung des schrägen Zuges an dem Planetenrad 4 bzw. die Antriebskraft bzw. Abtriebskraft des Getriebes 1 gezielt verändert werden. Zudem ist in diesem Ausführungsbeispiel das Planetenrad 4 mit der Hohlachse 7 und dem Antriebselement 12 gegenüber der Anordnung aus den Figuren 3 und 4 versetzt angeordnet. Das Planetenrad 4 mit der Hohlachse 7 und dem Antriebselement 12 befindet sich sozusagen in einem anderen Kreissegment der durch das Sonnenradelement 2 und das Hohlradelement 3 gebildeten Kreise. Aufgrund dieser Veränderung in der Anordnung innerhalb dieser Kreise kann der durch die erste und die zweite Zugstange 15, 15a gebildete Winkel in der Spitze des Vs des V-Antriebs gezielt verändert werden. Der Winkel des V-Antriebs ist in der Anordnung der Figur 5 aufgrund der Veränderung der Größenverhältnisse kleiner als in der Anordnung der Figuren 3 und 4.

Es ist in diesem Ausführungsbeispiel der Erfindung eine dritte Zugstange 15b vorgesehen. Das eine Ende der dritten Zugstange 15b ist mit dem ersten Ende der zweiten Zugstange 15a derart verbunden, dass die Zugstangen 15, 15a, 15b in Reihe angeordnet sind und einen Mehrfach-V-Antrieb bilden. Das andere Ende der dritten Zugstange 15b ist mit einem Zugbolzen 17 mit dem Planetenradträger 6 verbunden. Beide Enden der zweiten Zugstange 15a und damit die mit der Zugstange 15a verbundenen Enden der ersten Zugstange 15 und der dritten Zugstange 15b sind ebenfalls auf dem Planetenradträger 6 befestigt. Es ist eine Zugstangen-Gleitschiene 19 vorgesehen, auf welcher die zweite Zugstange 15a gelagert ist. Die Zugstangen-Gleitschiene 19 sowie die zweite Zugstange 15a sind horizontal am Planetenradträger 6 angeordnet. Die Verbindung der zweiten Zugstange 15a mit der dritten Zugstange 15b erfolgt hier erfindungsgemäß über einen fest angeordneten weiteren Zugbolzen 17'. Dieser ist vorzugsweise auf der Zugstangen-Gleitschiene 19 angeordnet.

In diesem Ausführungsbeispiel der Erfindung wird auch eine Möglichkeit der Antriebsart des Getriebes 1 gezeigt, bei welcher der Antrieb über das Hohlradelement 3 erfolgt. Das Hohlradelement 3 ist drehbar gelagert und das Sonnenradelement 2 ist fest angeordnet. Aufgrund einer Drehung des Hohlradelements 3 rollt das Planetenrad 4 auf dem Sonnenradelement 2 ab. Durch die Drehung des Planetenrads 4 wird die Lagerachse 5 des Planetenrads 4 mitgedreht. Dies führt zu einer Drehbewegung des Planetenradträgers 6, die aufgrund der erfindungsgemäßen beweglichen Anordnung der Lagerachse 5 an dem Planetenradträger 6 mit einer zeitlichen Verzögerung erfolgt. Die Hohlachse 7 des Planetenrads 4 bewirkt, dass auch das Antriebselement 12 mitgezogen und in Drehbewegung versetzt wird. Durch das Antriebselement 12 wird wiederum die erste Zugstange 15 mitgezogen. Somit wird der Kraftverlauf, der innerhalb des Getriebes 1 erfolgt, direkt in die Spitze des ersten Vs des V-Antriebs übertragen, so dass auch die Spitze des ersten Vs des V-Antriebs mitgezogen wird. Hierdurch wird wiederum die zweite Zugstange 15a, die auf der Zugstangen-Gleitschiene 19 angeordnet ist, mitgezogen. In der gezeigten Abbildung werden beide Zugstangen nach links bewegt. Durch diesen Vorgang erfolgt ein Transport der Kräfte von der einen Seite des Getriebes 1 auf dessen andere Seite; in der Figur von rechts nach links. Über die dritte Zugstange 15b wird die Kraft auf die Stelle des Planetenradträgers 4 übertragen, an der das andere Ende der dritten Zugstange 15b mit dem Zugbolzen 17 befestigt ist. In der Figur ist dies wieder auf der anderen Seite des Getriebes, so dass hier die Kraft wieder von links nach rechts übertragen wird. An dieser Stelle des Planetenradträgers 6, an der der Zugbolzen 17 befestigt ist, erfolgt der Abrieb für das Getriebe.

Es wir hier nochmals darauf hingewiesen, dass die gezeigten Ausführungsbeispiele keine Einschränkung für die Erfindung bedeuten. Es können gemäß der Erfindung alle in der Getriebetechnik möglichen Varianten realisiert werden. Beispielsweise kann die Zugvorrichtung weitere Zugstangen, Bolzen und Gleitschienen umfassen, die in geeigneter Weis am Getriebe angeordnet werden. Die Befestigung der einzelnen Elemente, insbesondere der Zugstangen, Bolzen und Gleitschienen kann an unterschiedlichen Punkten des Planetenradträgers gewählt werden. Es können unterschiedliche Größenverhältnisse der einzelnen Komponenten des Getriebes gewählt werden. Es können unterschiedlich Antriebs- und Abtriebs-Möglichkeiten des Getriebes realisiert werden. Die einzelne Ausführungsform liegt im Ermessen des Fachmanns und kann geeignet nach den Wünschen und Anforderungen an ein spezielles Getriebe und an dessen Anwendung gewählt werden. Insbesondere kann gemäß diesen Anforderungen die Art und Aufteilung der Kraftverhältnisse im Getriebe gezielt bestimmt werden. Beispielsweise kann die Zugtechnik und insbesondere auch der V-Antrieb mittels Seilen oder anderen Zugelementen anstelle von Zugstangen realisiert werden. Auch kann/können die Zugstange/n oder andere Zugelemente an der Mittelachse des Planetenradgetriebes befestigt werden. Die Verwendung von Zugstangen ermöglicht einen einfachen und stabilen Aufbau des Getriebes. In allen Ausführungsformen der Erfindung können erfindungsgemäß anstelle von Zugstangen jede Art von geeigneten Zugelementen, wie beispielsweise Zugseile, verwendet werden, wenn dies im einzelnen Anwendungsfall erwünscht oder zweckmäßig ist. Die Realisierung der Einzelheiten liegt im Ermessen des Fachmanns, im Rahmen der beigelegten Ansprüche.

### Bezugszeichenliste

1 Getriebe
1' zweites Getriebe
2 Sonnenradelement
2' zweites Sonnenradelement
3 Hohlradelement
3' zweites Hohlradelement
4 Planetenrad
4' zweites Planetenrad
5 Lagerachse
5' zweite Lagerachse
6 Planetenradträger
6' zweiter Planetenradträger
7 Hohlachse
7' zweite Hohlachse
8 Hohlachsenkugellager
8' zweites Hohlachsenkugellager
9 Abrollaußenfläche des
Hohlachsenkugellagers 8
9' zweite Abrollaußenfläche des Hohlachsenkugellagers 8'
10 Abrollelement
11 Abrollfläche des Abrollelements
11' zweite Abrollfläche
12 Antriebselement
12a Antriebselement
12' Antriebselement
12a' Antriebselement
13 Achse des Antriebselements
13a Achse
13' Achse
13a' Achse
14 Abrollinnenfläche der Hohlachse
15 (erste) Zugstange
15' (erste) Zugstange
15a zweite Zugstange
15a' zweite Zugstange
15b dritte Zugstange
15b' dritte Zugstange
16 Verbindungselement der Antriebselemente 12, 12a
16' Verbindungselement der Antriebselemente 12', 12a'
17 Zugbolzen
17' weiterer Zugbolzen
18 Zugbolzen-Gleitschiene
19 Zugstangen-Gleitschiene
P Punkt durch Tangentialebenen
V Verbindungspunkt der Zugstange

## Patentansprüche

1. Getriebe umfassend:
- ein Sonnenradelement (2) und ein Hohlradelement (3), von denen eines fest und das andere bewegbar angeordnet ist,
- ein auf einer Lagerachse (5) angeordnetes Planetenrad (4), welches derart zwischen dem Sonnenradelement (2)und dem Hohlradelement (3) angeordnet ist, dass es an seinem Umfang in Wirkverbindung mit der jeweils angrenzenden Seite des Sonnenradelements (2) und des Hohlradelements (3) steht,
- einen Planetenradträger (6), der mit der Lagerachse (5) des Planetenrads (4) verbunden und derart angeordnet ist, dass eine Führung des Planetenrads (4) zwischen dem Sonnenradelement (2) und dem Hohlradelement (3) bewirkt wird,
- eine fest mit dem Planetenrad (4) verbundene Hohlachse (7), welche das Planetenrad (4) beabstandet umgibt und
- ein zwischen dem Planetenrad (4) und der Hohlachse (7) auf einer Achse (1) angeordnetes Antriebselement (12) zum Antrieb der Hohlachse (7), das mit dem Planetenrad (4) und der Hohlachse (7) in Wirkverbindung steht,
**dadurch gekennzeichnet,**
- **dass** die Lagerachse (5) des Planetenrads (4) beweglich am Planetenradträger (6) angeordnet ist,
- **dass** das Antriebselement (12) eine äußere Abrollfläche (11) und die ihm zugewandte Innenseite der Hohlachse (7) eine Abrollinnenfläche (14) aufweist, über die die Wirkverbindung mittels Druck zwischen dem Antriebselement (12) und der Hohlachse (7) erzeugbar ist,
- **dass** die Hohlachse (7) eine Abrollaußenfläche (9) aufweist, und ein Abrollelement (10) mit der Abrollfläche (11) derart fest angeordnet ist, dass eine Wirkverbindung zwischen der Abrollfläche (11) des Abrollelements (10) und der Abrollaußenfläche (9) der Hohlachse (7) mittels Druck erzeugbar ist, und
- **dass** eine fest mit der Achse (13) des Antriebselements (12) verbundene Zugvorrichtung vorgesehen ist, mit der eine Antriebskraft erzeugbar ist, die gegenüber der Tangentialebene an der Abrollfläche (11) des Abrollelements (10) in einem Berührungspunkt (P) der Abrollfläche (11) des Abrollelements (10) mit der Abrollaußenfläche (9) der Hohlachse (7) schräg verläuft.

2. Getriebe nach Anspruch 1, **dadurch gekennzeichnet, dass** zwischen dem Planetenrad (4) und der Hohlachse (7) ein auf einer zweiten Achse (13') angeordnetes zweites Antriebselement (12') zum Antrieb der Hohlachse (7) angeordnet ist, das mit dem Planetenrad (4) und der Hohlachse (7) in Wirkverbindung steht, wobei die zweite Achse (13') fest mit der Zugvorrichtung und über ein Verbindungselement (16) mit der ersten Achse (13) verbunden ist.

3. Getriebe nach Anspruch 1 oder 2, **dadurch gekennzeichnet, dass** die Zugvorrichtung mit dem Planetenradträger (6) derart verbunden ist, dass ein Teil der Antriebskraft auf den Planetenradträger (6) wirkt.

4. Getriebe nach Anspruch 1, **dadurch gekennzeichnet, dass** die Zugvorrichtung eine erste Zugstange (15) umfasst, die fest an der ersten Achse (13') des ersten Antriebselements (12) angeordnet ist und gegenüber der Tangentialebene an der Abrollfläche (11) des Abrollelements (10) in dem Berührungspunkt (P) der Abrollfläche (11) des Abrollelements (10) mit der Abrollaußenfläche (9) der Hohlachse (7) schräg verläuft.

5. Getriebe nach Anspruch 4, **dadurch gekennzeichnet, dass** die Zugvorrichtung eine zweite Zugstange (15a) umfasst, die fest an der zweiten Achse (13') des zweiten Antriebselements (12) angeordnet ist, und die gegenüber der Tangentialebene an der Abrollfläche (11) des Abrollelements (10) in einem Berührungspunkt (P') der Abrollfläche (11) des Abrollelements (10) mit der Abrollaußenfläche (9) der Hohlachse (7) schräg verläuft und mit dem nicht an der ersten Achse (13) befestigten Ende der ersten Zugstange (15) zu einem Angriffspunkt (V) verbunden ist.

6. Getriebe nach Anspruch 4, **dadurch gekennzeichnet, dass** die Zugvorrichtung eine zweite Zugstange (15a) umfasst, deren eines Ende fest mit dem Planetenradträger (6) verbunden ist,
und deren anderes Ende mit dem freien Ende der ersten Zugstange (15) verbunden ist, derart, dass die erste und
die zweite Zugstange (15, 15a) einen V-Antrieb bilden.

7. Getriebe nach Anspruch 4, **dadurch gekennzeichnet, dass** die Zugvorrichtung eine zweite Zugstange (15a) umfasst,
deren erstes Ende fest mit dem Planetenradträger (4) verbunden ist, und deren zweites Ende sowohl mit dem freien Ende der ersten Zugstange (15) als auch mit dem Planetenradträger (4) verbunden ist, dass eine dritte Zugstange (15b) vorgesehen ist, deren eines Ende mit dem ersten Ende der zweiten Zugstange (15a) verbunden ist derart, dass die Zugstangen (15, 15a, 15b) in Reihe angeordnet sind und einen Mehrfach-V-Antrieb bilden.

8. Getriebe nach einem der Ansprüche 4 bis 7, **dadurch gekennzeichnet, dass** die Zugvorrichtung einen Zugbolzen (17) umfasst, der mit einem freien Ende einer der Zugstangen (15, 15a, 15b) verbunden ist und der derart angeordnet ist, dass der Antrieb oder Abtrieb des Getriebes (1) über den Zugbolzen (17) erfolgen kann.

9. Getriebe nach Anspruch 5, **dadurch gekennzeichnet, dass** eine Zugbolzen-Gleitschiene (18) derart angeordnet ist, dass ein mit dem Angriffspunkt (V) der Zugvorrichtung verbundener Zugbolzen (17) entlang der Zugbolzen-Gleitschiene (18) in eine vorherbestimmte Richtung bewegbar ist.

10. Getriebe nach einem der vorangehenden Ansprüche, **dadurch gekennzeichnet, dass** eine Zugstangen-Gleitschiene (19) vorgesehen ist, die geeignet zur Führung einer der Zugstangen (15, 15a, 15b) in eine vorherbestimmte Richtung angeordnet ist.

11. Getriebe nach einem der vorangehenden Ansprüche, **dadurch gekennzeichnet, dass** das erste und das zweite Antriebselement (12, 12') jeweils als Antriebskugellager ausgebildet sind.

12. Getriebe nach einem der vorangehenden Ansprüche, **dadurch gekennzeichnet, dass** auf der Hohlachse (7) ein Hohlachsenkugellager (8) aufgebracht ist, dessen Außenfläche die Abrollaußenfläche (9) der Hohlachse (7) bildet, mit der die Wirkverbindung zu der Abrollfläche (11) des Abrollelements (10) mittels Druck erzeugbar ist.

13. Getriebe nach einem der vorangehenden Ansprüche, **dadurch gekennzeichnet, dass** das Getriebe (1) als Zahnstangengetriebe ausgebildet ist, bei dem das Sonnenradelement (2) und das Hohlradelement (3) jeweils als Zahnstange und das Abrollelement (10) als lineares Element mit einer linearen Abrollfläche (11) ausgebildet sind, die jeweils fest angeordnet oder in einer Gleitschiene beweglich gelagert sind und parallel zueinander verlaufen.

14. Getriebe nach Anspruch 5 und 13, **dadurch gekennzeichnet, dass** zwei der Zahnstangengetriebe vorgesehen sind, die ein gemeinsames Abrollelement (10) aufweisen, in Bezug auf welches die beiden Zahnstangengetriebe spiegelbildlich zueinander angeordnet sind, wobei die Zugstangen (15, 15') beider Zahnstangengetriebe in dem gemeinsamen Angriffspunkt (V) miteinander verbunden sind, der entlang einer Symmetrieachse angeordnet ist.

15. Getriebe nach einem der Ansprüche 1 bis 12, **dadurch gekennzeichnet, dass** das Getriebe (1) als Planentenradgetriebe ausgebildet ist, bei dem das Sonnenradelement (2), das Hohlradelement (3) und der Planetenradträger (6) jeweils als Zahnrad und das Abrollelement (10) als Abrollscheibe ausgebildet sind, die jeweils an einer zentralen Achse fest oder drehbar gelagert sind und konzentrische Kreisbahnen bilden.

## Claims

1. Transmission comprising:
- a sun gear element (2) and an internal gear element (3), of which one is arranged fixedly and the other is arranged movably,
- a planetary gear (4) which is arranged on a bearing axle (5) and is arranged between the sun gear element (2) and the internal gear element (3) in such a way that, on its circumference, it is operatively connected to the respective adjacent side of the sun gear element (2) and the internal gear element (3),
- a planetary gear carrier (6) which is connected to the bearing axle (5) of the planetary gear (4) and is arranged in such a way that guidance of the planetary gear (4) between the sun gear element (2) and the internal gear element (3) is brought about,
- a hollow axle (7) which is connected fixedly to the planetary gear (4) and surrounds the planetary gear (4) at a spacing from it, and
- a drive element (12) for driving the hollow axle (7), which drive element (12) is arranged on an axle (1) between the planetary gear (4) and the hollow axle (7), and is operatively connected to the planetary gear (4) and the hollow axle (7),
**characterized in that**
- the bearing axle (5) of the planetary gear (4) is arranged movably on the planetary gear carrier (6),
- **in that** the drive element (12) has an outer rolling face (11), and the inner side, facing the said drive element (12), of the hollow axle (7) has a rolling inner face (14), via which the operative connection can be produced between the drive element (12) and the hollow axle (7) by means of pressure,
- **in that** the hollow axle (7) has a rolling outer face (9), and a rolling element (10) is arranged fixedly with the rolling face (11) in such a way that an operative connection can be produced between the rolling face (11) of the rolling element (10) and the rolling outer face (9) of the hollow axle (7) by means of pressure, and
- **in that** a tension apparatus which is connected fixedly to the axle (13) of the drive element (12) is provided, by way of which tension apparatus a drive force can be produced which runs obliquely with respect to the tangential plane on the rolling face (11) of the rolling element (10) at a contact point (P) of the rolling face (11) of the rolling element (10) with the rolling outer face (9) of the hollow axle (7).

2. Transmission according to Claim 1, **characterized in that** a second drive element (12') which is arranged on a second axle (13) for driving the hollow axle (7) is arranged between the planetary gear (4) and the hollow axle (7), which second drive element (12') is operatively connected to the planetary gear (4) and the hollow axle (7), the second axle (13') being connected fixedly to the tension apparatus and via a connecting element (6) to the first axle (13).

3. Transmission according to Claim 1 or 2, **characterized in that** the tension apparatus is connected to the planetary gear carrier (6) in such a way that part of the drive force acts on the planetary gear carrier (6).

4. Transmission according to Claim 1, **characterized in that** the tension apparatus comprises a first tension rod (15) which is arranged fixedly on the first axle (13') of the first drive element (12), and runs obliquely with respect to the tangential plane on the rolling face (11) of the rolling element (10) at the contact point (P) of the rolling face (11) of the rolling element (10) with the rolling outer face (9) of the hollow axle (7).

5. Transmission according to Claim 4, **characterized in that** the tension apparatus comprises a second tension rod (15a) which is arranged fixedly on the second axle (13') of the second drive element (12), and which runs obliquely with respect to the tangential plane on the rolling face (11) of the rolling element (10) at a contact point (P') of the rolling face (11) of the rolling element (10) with the rolling outer face (9) of the hollow axle (7), and is connected to that end of the first tension rod (15) which is not fastened to the first axle (13), in order to form a point of action (V).

6. Transmission according to Claim 4, **characterized in that** the tension apparatus comprises a second tension rod (15a), one end of which is connected fixedly to the planetary gear carrier (6), and the other end of which is connected to the free end of the first tension rod (15), in such a way that the first and the second tension rod (15, 15a) form a V-drive.

7. Transmission according to Claim 4, **characterized in that** the tension apparatus comprises a second tension rod (15a), the first end of which is connected fixedly to the planetary gear carrier (4), and the second end of which is connected both to the free end of the first tension rod (15) and to the planetary gear carrier (4), **in that** a third tension rod (15b) is provided, one end of which is connected to the first end of the second tension rod (15a) in such a way that the tension rods (15, 15a, 15b) are arranged in series and form a multiple V-drive.

8. Transmission according to one of Claims 4 to 7, **characterized in that** the tension apparatus comprises a tension bolt (17) which is connected to a free end of one of the tension rods (15, 15a, 15b) and which is arranged in such a way that the drive or output of the transmission (1) can take place via the tension bolt (17).

9. Transmission according to Claim 5, **characterized in that** a tension bolt sliding rail (18) is arranged in such a way that a tension bolt (17) which is connected to the point of action (V) of the tension apparatus can be moved along the tension bolt sliding rail (18) in a predefined direction.

10. Transmission according to one of the preceding claims, **characterized in that** a tension rod sliding rail (19) is provided which is arranged in a manner which is suitable for guiding one of the tension rods (15, 15a, 15b) in a predefined direction.

11. Transmission according to one of the preceding claims, **characterized in that** the first and the second drive element (12, 12') are configured in each case as drive ball bearings.

12. Transmission according to one of the preceding claims, **characterized in that** a hollow axle ball bearing (8) is attached on the hollow axle (7), the outer face of which hollow axle ball bearing (8) forms the rolling outer face (9) of the hollow axle (7), by way of which rolling outer face (9) the operative connection to the rolling face (11) of the rolling element (10) can be produced by means of pressure.

13. Transmission according to one of the preceding claims, **characterized in that** the transmission (1) is configured as a rack and pinion gear mechanism, in the case of which the sun gear element (2) and the internal gear element (3) are configured in each case as a rack, and the rolling element (10) is configured as a linear element with a linear rolling face (11), which are arranged in each case fixedly or are mounted movably in a sliding rail and move parallel to one another.

14. Transmission according to Claims 5 and 13, **characterized in that** two of the rack and pinion gear mechanisms are provided which have a common rolling element (10), in relation to which the two rack and pinion gear mechanisms are arranged in a mirror-inverted manner with respect to one another, the tension rods (15, 15') of the two rack and pinion gear mechanisms being connected to one another at the common point of action (V) which is arranged along an axis of symmetry.

15. Transmission according to one of Claims 1 to 12, **characterized in that** the transmission (1) is configured as a planetary gear transmission, in the case of which the sun gear element (2), the internal gear element (3) and the planetary gear carrier (6) are configured in each case as a gearwheel, and the rolling element (10) is configured as a rolling disc, which are mounted in each case fixedly or rotatably on a central axle and form concentric circular tracks.

## Revendications

1. Transmission, comprenant :
- un élément de roue solaire (2) et un élément de couronne (3) dont l'un est disposé de manière fixe et l'autre est disposé de manière mobile,
- un satellite (4) disposé sur un axe de palier (5), qui est disposé entre l'élément de roue solaire (2) et l'élément de couronne (3) de telle sorte qu'il soit en liaison fonctionnelle au niveau de sa périphérie avec le côté respectivement adjacent de l'élément de roue solaire (2) et de l'élément de couronne (3),
- un porte-satellites (6) qui est connecté à l'axe de palier (5) du satellite (4) et qui est disposé de manière à provoquer un guidage du satellite (4) entre l'élément de roue solaire (2) et l'élément de couronne (3),
- un axe creux (7) connecté fixement au satellite (4), qui entoure le satellite (4) à distance de celui-ci et
- un élément d'entraînement (12) disposé entre le satellite (4) et l'axe creux (7) sur un axe (1), pour entraîner l'axe creux (7), lequel est en liaison fonctionnelle avec le satellite (4) et l'axe creux (7),
**caractérisée en ce que**
- l'axe de palier (5) du satellite (4) est disposé de manière mobile sur le porte-satellites (6),
- l'élément d'entraînement (12) présente une surface de roulement extérieure (11) et le côté intérieur de l'axe creux (7), tourné vers celui-ci, présente une surface de roulement intérieure (14) sur laquelle peut être établie la liaison fonctionnelle par pression entre l'élément d'entraînement (12) et l'axe creux (7),
- l'axe creux (7) présente une surface de roulement extérieure (9) et un élément de roulement (10) avec la surface de roulement (11) est disposé fixement de telle sorte qu'une liaison fonctionnelle entre la surface de roulement (11) de l'élément de roulement (10) et la surface de roulement extérieure (9) de l'axe creux (7) puisse être établie par pression, et
- un dispositif de traction connecté fixement à l'axe (13) de l'élément d'entraînement (12) est prévu, avec lequel une force d'entraînement peut être générée, laquelle est orientée obliquement par rapport au plan tangentiel à la surface de roulement (11) de l'élément de roulement (10) en un point de contact (P) de la surface de roulement (11) de l'élément de roulement (10) avec la surface de roulement extérieure (9) de l'axe creux (7).

2. Transmission selon la revendication 1, **caractérisée en ce qu'**entre le satellite (4) et l'axe creux (7) est disposé un deuxième élément d'entraînement (12') disposé sur un deuxième axe (13') pour l'entraînement de l'axe creux (7), lequel est en liaison fonctionnelle avec le satellite (4) et l'axe creux (7), le deuxième axe (13') étant connecté fixement au dispositif de traction et, par le biais d'un élément de liaison (16), au premier axe (13) .

3. Transmission selon la revendication 1 ou 2, **caractérisée en ce que** le dispositif de traction est connecté au porte-satellites (6) de telle sorte qu'une partie de la force d'entraînement agisse sur le porte-satellites (6).

4. Transmission selon la revendication 1, **caractérisée en ce que** le dispositif de traction comprend une première barre de traction (15) qui est disposée fixement au niveau du premier axe (13') du premier élément d'entraînement (12) et qui s'étend obliquement par rapport au plan tangentiel à la surface de roulement (11) de l'élément de roulement (10) au point de contact (P) de la surface de roulement (11) de l'élément de roulement (10) avec la surface de roulement extérieure (9) de l'axe creux (7).

5. Transmission selon la revendication 4, **caractérisée en ce que** le dispositif de traction comprend une deuxième barre de traction (15a) qui est disposée fixement au niveau du deuxième axe (13') du deuxième élément d'entraînement (12) et qui s'étend obliquement par rapport au plan tangentiel à la surface de roulement (11) de l'élément de roulement (10) en un point de contact (P') de la surface de roulement (11) de l'élément de roulement (10) avec la surface de roulement extérieure (9) de l'axe creux (7), et qui est connectée au niveau d'un point d'engagement (V) à l'extrémité de la première barre de traction (15) qui n'est pas fixée au premier axe (13) .

6. Transmission selon la revendication 4, **caractérisée en ce que** le dispositif de traction comprend une deuxième barre de traction (15a) dont une extrémité est connectée fixement au porte-satellites (6) et dont l'autre extrémité est connectée à l'extrémité libre de la première barre de traction (15) de telle sorte que la première et la deuxième barre de traction (15, 15a) forment un entraînement en V.

7. Transmission selon la revendication 4, **caractérisée en ce que** le dispositif de traction comprend une deuxième barre de traction (15a) dont la première extrémité est connectée fixement au porte-satellites (4) et dont la deuxième extrémité est connectée à la fois à l'extrémité libre de la première barre de traction (15) et au porte-satellites (4), et **en ce qu'**il est prévu une troisième barre de traction (15b) dont une extrémité est connectée à la première extrémité de la deuxième barre de traction (15a) de telle sorte que les barres de traction (15, 15a, 15b) soient disposées en rangée et forment un entraînement multiple en V.

8. Transmission selon l'une quelconque des revendications 4 à 7, **caractérisée en ce que** le dispositif de traction comprend un boulon de traction (17) qui est connecté à une extrémité libre de l'une des barres de traction (15, 15a, 15b) et qui est disposé de telle sorte que l'entraînement ou la prise de force de la transmission (1) puisse s'effectuer par le biais du boulon de traction (17).

9. Transmission selon la revendication 5, **caractérisée en ce qu'**un rail de glissement de boulon de traction (18) est disposé de telle sorte qu'un boulon de traction (17) connecté au point d'engagement (V) du dispositif de traction puisse être déplacé le long du rail de glissement de boulon de traction (18) dans une direction prédéterminée.

10. Transmission selon l'une quelconque des revendications précédentes, **caractérisée en ce qu'**un rail de glissement de barre de traction (19) est prévu, lequel est disposé de manière appropriée pour guider l'une des barres de traction (15, 15a, 15b) dans une direction prédéterminée.

11. Transmission selon l'une quelconque des revendications précédentes, **caractérisée en ce que** le premier et le deuxième élément d'entraînement (12, 12') sont chacun réalisés sous forme de roulement à billes d'entraînement.

12. Transmission selon l'une quelconque des revendications précédentes, **caractérisée en ce qu'**un roulement à billes d'axe creux (8) est monté sur l'axe creux (7), sa surface extérieure formant la surface de roulement extérieure (9) de l'axe creux (7) avec laquelle la liaison fonctionnelle avec la surface de roulement (11) de l'élément de roulement (10) peut être établie par pression.

13. Transmission selon l'une quelconque des revendications précédentes, **caractérisée en ce que** la transmission (1) est réalisée sous forme de transmission à crémaillère, dans laquelle l'élément de roue solaire (2) et l'élément de couronne (3) sont chacun réalisés sous forme de crémaillère et l'élément de roulement (10) est réalisé sous forme d'élément linéaire avec une surface de roulement linéaire (11), lesquels sont disposés à chaque fois fixement ou sont supportés de manière déplaçable dans un rail de glissement et s'étendent parallèlement les uns aux autres.

14. Transmission selon les revendications 5 et 13, **caractérisée en ce que** deux des transmissions à crémaillère sont prévues, lesquelles présentent un élément de roulement commun (10), par rapport auquel les deux transmissions à crémaillère sont disposées avec une symétrie spéculaire l'une par rapport à l'autre, les barres de traction (15, 15') des deux transmissions à crémaillère étant connectées l'une à l'autre au point d'engagement commun (V) qui est disposé le long d'un axe de symétrie.

15. Transmission selon l'une quelconque des revendications 1 à 12, **caractérisée en ce que** la transmission (1) est réalisée sous forme de transmission planétaire dans laquelle l'élément de roue solaire (2), l'élément de couronne (3) et le porte-satellites (6) sont chacun réalisés sous forme de roue dentée et l'élément de roulement (10) est réalisé sous forme de disque de roulement, lesquels sont à chaque fois supportés de manière fixe ou rotative sur un axe central et forment des pistes circulaires concentriques.
